# EUROPEAN PATENT APPLICATION

(11) **EP 3 466 545 A2**
(43) Date of publication of application: **10.04.2019**
(21) Application number: 16834707.8
(22) Date of filing: 08.08.2016
(51) Int. Cl.: B05B 9/08, B05B 11/02, A01M 7/00

(54) **NOVEL MICRO-SPRAYING BACKPACK WITH INDEPENDENT SYSTEM FOR MIXING BY MEANS OF A REMOVABLE CARTRIDGE**

(30) Priority: 10.08.2015 ES 201500607
(71) Applicant: Villar Cloquell, Francisco Javier, 46018 Valencia (ES)
(72) Inventor: SALVADOR BAREA, Francisco, 46018 Valencia (ES); ANTONIO MENDOZA, Pedro, 46018 Valencia (ES)
(74) Representative: Galán Vélez, Reyes
(86) International application number: PCT/ES2016/070596
(87) International publication number: WO 2017/025656

(57) **Abstract**

The new dosing system for micro spray backpacks is a reusable device which has at least one cartridge that allows to contain at least one agrochemical element or another type of concentrate which is to be dispensed separately from the dilution, with the means for performing this task at the very moment at which its application is required. Avoiding the risk of intoxication during conventional dilution, as well as the spills cause while cleaning the tanks of the current backpacks. The device contemplates the adjustment in the concentration of the mix, as well as the change of the cartridges without spilling the solvent contained in the tank of the backpack. The cartridge prevents oxidation of the concentrate which is to be applied due to its being isolated, reducing economic and environmental costs. The device is designed for use in agricultural and industrial sectors.

## Description

### Technique sector

This invention is comprised within the agricultural and industrial sectors, especially designed for manufacturers of spray systems for liquid agents.

### Invention background

There are currently different types of devices designed for spraying liquid agents, these devices are used for tasks such as dispensing fertilizers or pesticides in agricultural environments or other applications in the industrial environment. These devices includes well-known systems for manual use by the person performing the treatment and their sprayers are generally known as spray or sprinkler backpacks, mainly comprising a tank carrying the liquid to be sprayed. This liquid is made up by a concentrated liquid which is generally diluted in water. The tank is pressurised by either a manual system based on the action of a system of levers and a plunger or, assisted by a small compressor group which is generally electromechanical. The agent to be sprayed diluted in the water is conducted due to this pressure generated by the compressed air through a hose towards the spray nozzle located at the end of a hollow tube known as the spray lance. There are alternatives to this arrangement consistent of providing the suction and pumping means independent of the tank and close to the spray lance as described in patent ES 2019773 of the applicable Enrique Genovés based on the use of mechanisms of motor action, which as can be seen differs from the proposed one.
Thus, the artwork reflects different solutions aimed at improving the pressurisation of the tank such as the patent US5984199A Backpack sprayer with an expandable accumulator chamber and the American patent US 8672364 B2 Quick disconnect device for connecting a sprayer tank to a portable pump assembly, as well as other aimed at automating the process including electrical systems such as patent CN200987334Y Backpack electric sprayer.
These patents reflect significant differences both in the pressurisation system of the mixture and in the final function, given that for example the patent US5984199A Backpack sprayer with an expandable accumulator chamber consists of a container in the form of an elastomer bag which improves the output pressure of the mixture, but it is not an independent device which avoids the mixture directly in the tank or the rest of safety, volume control y hygiene features which this patent supports.
The patent Backpack electric sprayer CN200987334Y includes an external electrical pump that generates greater pressure for the output of the mixture but does not involve any novelty in so far as performing the mixture outside of the tank.
The patent Sprayers for dispensing deterrent chemicals US5775543A, includes a container with the mixture which is pre-mixed and pressured in which the tank is designed in the form of a flexible bag.

There are no known devices such as the one described in this invention.

### Purpose of the invention

Providing the agricultural and industrial sectors with new micro-aspersion backpack which include a dosing device which is independent from the mixing tank which minimises the problems involving environmental contamination, safety and health derived from the use of agrochemicals or other potentially hazardous or contaminant substances, avoiding product leaks, impact on the operators and their environment.

It includes advantages in the use such as the easy use of cartridges with the agent to be dispersed, reduced weight, optimal dosing and easy handling.

Versions have been planned for which the use of biodegradable cartridges has been considered. This will allow for a more simple and efficient recycling of the product once it is empty.

On the other hand, versions have also been considered that would allow the cartridge to be refilled and reused for greater utilisation of the materials while also providing greater possibilities in the formulation of the components to be sprayed.

This way the main objectives of the invention are focused on avoiding the user from coming into contact with potentially hazardous substances, while representing a considerable saving given that the mixture is carried out at the time of its use, maintaining the concentrated agent preserved in the cartridge and not diluted in the tank with the consequent problem involving spilling any of the mixture that has not been used and cleaning the tank.

### Description of the invention

There are multiple problems arising from the handling of the agents to be sprayed in a backpack, regardless of whether these are pesticide or fertilisers for example, or others aimed for industrial applications. On the other hand, once these substances have been dissolved in the tank, the content must be used in a short period of time. It is normal for all the prepared product to not be used, yet this leads to serious environmental problems due to the difficulty for recovering these subproducts. The recommended invention resolves these problems, allowing to mix the substances to be dispenses with the solvent at the time of application, using only the amount needed in an application. For this, the backpack has the means to store the substances to be dispensed separate from the tank, in independent cartridges and means for appropriately dosing these substances.

The recommended micro spray backpack with independent mixture system through removable cartridge has a system of cartridges with their corresponding supplementary cartridge receiver stored in the backpack. These cartridges can be reusable in nature and allow for a controlled and safe use of the fluid to be dispensed, thus avoiding any handling by the operator of potentially harmful or hazardous substances for the operator and the for the environment, as well as avoiding the deterioration of the equipment. The cartridge, which will preferable be cylindrical, contains at its lower base conventional connection means such as an interconnection valve with the cartridge receiver that allows the fluid to flow when it is connected and has the means to avoid any spillage when the cartridge is removed. These means are materialised in the form of a pierceable membrane made of an elastomer material, the elasticity of which allows for the closure and sealing of this temporary opening after removing the connection needle that comes with the cartridge receiver in the backpack. Versions have been foreseen in which the interconnection of the cartridge and the receiver of the same is carried out by means of a conventional quick coupler fitted with at least one non-return valve. This version is especially useful when the flow to be dispensed is of high viscosity, as its flow is facilitated by a system that allows for a greater flow diameter than the needle system. The top cover of the cartridge forms a plunger that slides inside the side revolution surface of the same to allow for draining the cartridge, and has the means to guarantee its airtightness through the use of conventional O-rings or tight fit. Versions have been foreseen in which the spray backpacks have a cartridge housing with means for generating pressure on the cartridge, such as a piston actuated using gas or a spring the energy of which is stored and transferred to the plunger of the described cartridge, with the purpose of maintaining uniform pressure to facilitate the outflow of the fluid, especially in the event of the cartridge containing high-viscosity fluids.

Versions are contemplated in which the cartridge which stores the substance to be dispenses deforms when its volume varies, as its body is made using high-elasticity and low thickness plastic, so the suction of the fluid can reduce its volume due to its walls deforming. There are also other alternatives to be applied such as manufacturing the cartridge using an elastic material which contains the substance to be dispensed in compressed form, the pressure stored in the cartridge is transmitted to the fluid when the mixer valve is open. The cartridge receiver is fitted with at least one interconnection system with its supplementary cartridge allowing the receiver, when housing several cartridges, to have the means to select and dose each one independently. This allows for mixing substances at the time of their application, avoiding inconveniences such as the degradation of some mixtures over time, and correcting their possible mixing subject to the criteria of the person using the backpack. This is particularly useful as it allows to perform different treatments or applications without the need to perform, as carried out traditionally, a subsequent clean and preparation of the spray tank.

These selection and dosage means are carried out thanks to the cartridge receiver being fitted with at least one opening and adjusting valve for each of the cartridges installed, the output of these opening and adjusting valves converge in a common collector, where the mixture is carried out and the substances to be dispensed are distributed. The outflow of this collector flow into the water dragline of the tank prior to the spray lance, allowing to mix with the water in the tank by means of the venturi effect or optionally supported by a complementary pump.

The collector can be cleaned after closing all of the valves of the cartridges; upon actuating the pressure system of the backpack, the water or solvent flow towards the outside will perform this cleaning task.

Versions have been foreseen in which the collector that collects the different substances to be sprayed is fitted with a conventional static mixer to facilitate the correct integration of the components with the solvent, for fluids with very different viscosities or very low mixed flows. Other versions have also been foreseen in which this mixer is dynamic.

### Brief description of the drawings

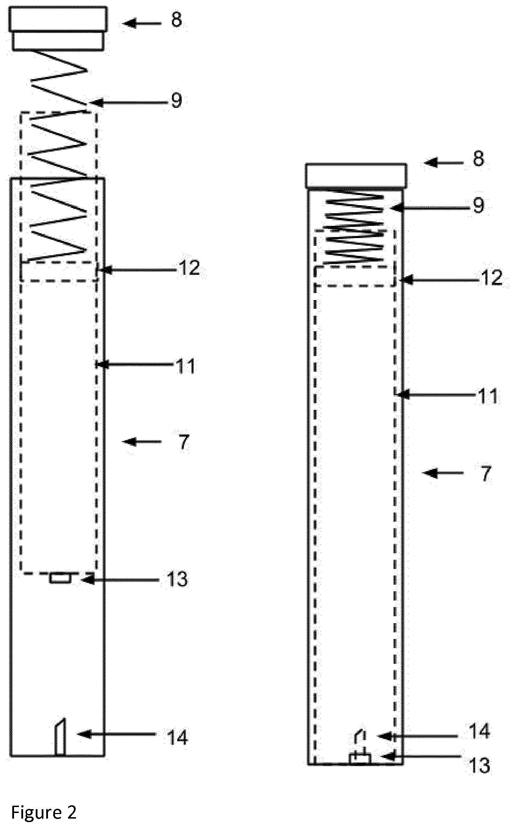

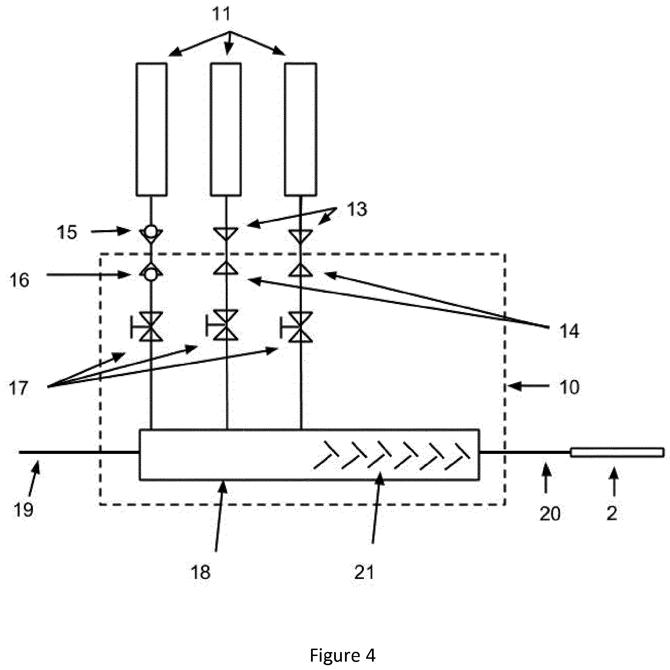

For better understanding the description contained in this report, it is accompanied by some drawings which, by way of example but not limited to, represent a list of the figure of the device components.
Figure 1 represents a spray backpack which includes:
   1. Spray lance
   2. Connection hose of the spray lance
   3. Backpack tank
   4. Actuating level
   5. Pressure group of the backpack
   6. Solvent tank cap
   7. Cartridge housing
   8. Cartridge housing cover
   10. Cartridge receivers
   11. Cartridge
   14. Connection needle
Figure 2 represents a cartridge being inserted in the cartridge housing
   7. Cartridge housing
   8. Cartridge housing cover
   9. Cartridge housing spring
   11. Cartridge
   12. Cartridge cap
   13. Cartridge connection membrane
   14. Connection needle
Figure 3 represents the cartridge already inserted in the cavity in the cartridge housing ,with its cap closed, with the connection needle connected and the spring in compression. Where the following can be seen:
   7. Cartridge housing
   8. Cartridge housing cover
   9. Cartridge housing spring
   11. Cartridge
   12. Cartridge cap
   13. Cartridge connection membrane
   14. Connection needle
Figure 4 represents a detailed diagram of the cartridge receiver element 10, in this case exemplified with three cartridges, where:
   2. Connection hose of the spray lance
   10. Cartridge receiver
   11. Cartridges
   13. Cartridge connection membrane
   14. Connection needle
   15. Male quick connector
   16. Female quick connector
   17. Adjustment valves
   18. Collector
   19. Water or solvent inflow
   20. Collector joint to hose outflow
   21. Static mixer

### Description of a preferred implementation mode

Citing, by way of example, a preferred implementation mode, in which the materials used for manufacturing the new micro spray backpack with independent mixture system through removable cartridge presented in this report is independent of the purpose of the invention, as are all the accessories that may be presented, provided they do not affect its essential nature.

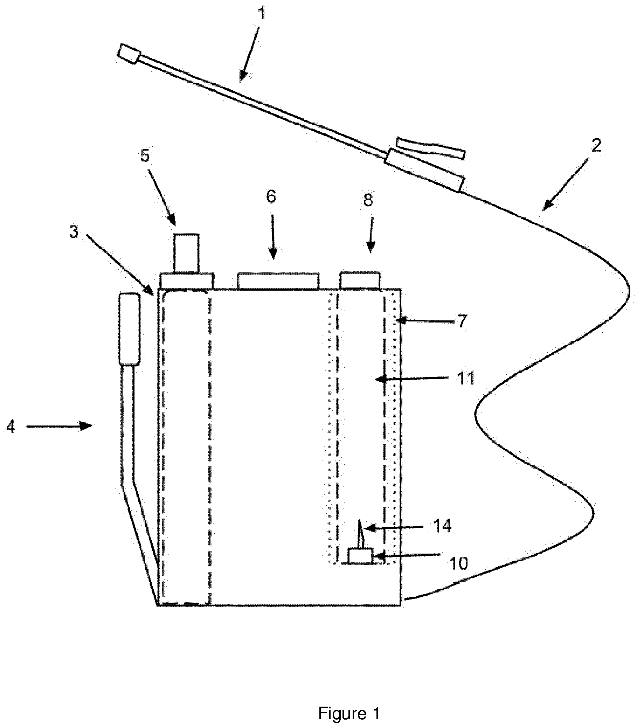

The backpack has the means to house in an isolated manner with regard to the solvent which is located in the tank (3) Figure 1, the agents to be dispensed, these means comprise at least one cartridge (11) which houses the concentrated agent, which can be a pesticide or any other substance. The cartridges with preferably be cylindrical and comprise, at their lower base, an interconnection valve with the reciprocal cartridge receiver (10) which allows the flow of fluid when they are interconnected and which has the means to avoid any spill when the cartridge is removed. These means are materialised in the form of a pierceable membrane (13) made using elastomer material, the elasticity of which allows to close and seal this temporary opening caused by the connection needle (14) of the cartridge receiver. The top cover of the cartridge (12) forms a plunger that slides inside the side revolution surface of the same and has the means to guarantee its airtightness through the use of conventional O-rings, this movement of the plunger allows to empty the cartridge. It has a spring (9) which puts pressure on the top cap to facilitate the discharge of the substance to be dispensed.

The cartridge receiver (10) comprises at least one conventional adjustment valve (17) per cartridge, which adjust the flow of fluid entering into the collector (18) where it is mixed with the water or solvent from the tank that flows under pressure through its entry (19) into the static mixer (21) located inside the collector, the function of which is to receive and mix the substances to be applied by means of fixed structures that produce variations within the fluid contributing to its integration with the solvent. Subsequently the mixture leaves the collector via the outflow point (20) towards the hose (2) and its corresponding spray lance (1) ready to be dispensed.

For better understanding of the invention its use is described, such as the application of a fertiliser, the user introduces at least one cartridge (11) with the concentrate inside a complementary cavity for housing the cartridges (7), this cavity may have a cover (8) to guarantee the cartridge is secured. The lower end of the cavity coincides with at least one cartridge receiver (10) in such a way that when a cartridge is inserted, thanks to its connection, by means of the membrane (13) and needle (14) cooperation, allows for the content to flow towards the collector (18) as described. This configuration as described allows for the simultaneous use of several cartridges offering the possibility of preparing different mixes depending on the requirements of the person applying the treatment.

The pressurisation of the fluid contained in the tank is carried out by conventional means such as the user actuating a set of levers (4) which operate the pressure group of the backpack (5) located on the tank. The tank comes with the corresponding filling and spill cap (6).

## Claims

1. Micro spray backpack of those used in the industrial and agricultural sectors for spraying using pressurisation systems, both manual and assisted by an electromechanical pump **characterised by** having the means to perform an adjustable mix of the solvent contained in the tank of the backpack (3) with at least one substance of a treatment to be applied, performing this solution or mixture at the time of application and without the treatment substances coming into contact with the content of a backpack tank until that time; these means comprise at least one airtight cartridge (11) preferably cylindrical which contains the substances to be diluted and dispensed which has a conventional connection means with at lease one cartridge receiving unit (10); the top cover (12) of the cartridge forms a plunger which slides inside the side revolution surface of the same and has the means to guarantee its airtightness through the use of conventional O-rings or tight fit. The cartridge is emptied towards the cartridge receiving unit (10) housed in the backpack which spills the content of these substances into a common collector (18) that has an entry (19) through which the pressurised fluid penetrates from the tank and the outflow of which spills directly towards the spray lance (1), wherein the cartridge receiving unit has at least one conventional opening or adjusting valve that allows for the person using the backpack to adjust the mixture; the common collector has a mixer to facilitate the integration of the mix.

2. Claim dependent on no. 1 **characterised by** the cartridge housing having convention means for compressing the plunger of the cartridge, such as the incorporation of a spring that exerts direct pressure on the plunger of the cartridge.

3. Claim dependent on no. 1 **characterised by** the cartridges having the means to allow the deformation and volume reduction of the same when it is being emptied, due to the cartridge being made of an elastomer material preferably of low thickness.

4. Claim dependent on no. 1 **characterised by** the cartridges having an elastic membrane capable of dilating due to the pressure and recovering its initial shape upon opening the cartridge valve.

5. Claim dependent on no. 1 **characterised by** the cartridge connection means being made up by a membrane (13) made using an elastomer material, the elasticity of which allows to close and seal this temporary opening caused by at least one connection needle (14) which communicates with a cartridge receiving unit (10).

6. Claim dependent on no. 1 to 4 **characterised by** the cartridge connection means being made up by a set of male (15) and female (16) conventional quick connectors, positioned indistinctly between the cartridge pair and the cartridge receiving unit.
